# EUROPÄISCHE PATENTANMELDUNG

(11) **EP 1 408 014 A2**
(43) Veröffentlichungstag der Anmeldung: **14.04.2004**
(21) Anmeldenummer: 03020045.5
(22) Anmeldetag: 04.09.2003
(51) Int. Cl.: C03C 17/00, C09K 3/18

(54) **Substrat mit selbstreinigender Oberfläche**

(30) Priorität: 10.10.2002 DE 10247278
(71) Anmelder: Schollglas Holding- und Geschäftsführungsgesellschaft mbH, 30890 Barsinghausen (DE)
(72) Erfinder: Holtmann, Klaus, Dr., 30179 Hannover (DE); Weinfurtner, Hans, 92533 Wernberg-Köblitz (DE); Tassarek-Metz, Mario, 30916 Isernhagen (DE)
(74) Vertreter: Seewald, Jürgen, Dipl.-Ing.

(57) **Zusammenfassung**

Die vorliegende Erfindung betrifft ein Substrat mit selbstreinigender Oberfläche, die hyperhydrophob unter Ausnutzung des Lotus-Effektes ausgestattet ist. Aufgabe der Erfindung ist es, derartige Substrate zur Verfügung zu stellen, die bei selbstreinigender Oberfläche eine hinreichende Transparenz bzw. einen hinreichenden Glanz aufweisen. Gelöst wird diese Aufgabe dadurch, dass die selbstreinigende Oberfläche aus einem Bereich (B) mit einer nicht hyperhydrophoben Oberfläche beseht, der durch Bereiche (A) mit einer hyperhydrophoben Oberfläche unterbrochen ist oder umgekehrt, wobei die Abstände (x) zwischen den hyperhydrophoben Bereichen (A) bzw. die Unterbrechungen (x) im hyperhydrophoben Bereich (A) nicht größer als der Durchmesser eines Tropfens eines benetzenden Mediums sind, der sich unter Idealbedingungen beim Wachstum eines Keims während der Kondensation auf dem nicht hyperhydrophoben Bereich (B) bildet.

## Beschreibung

Die vorliegende Erfindung betrifft ein Substrat mit selbstreinigender Oberfläche, die hyperhydrophob unter Ausnutzung des Lotus-Effektes ausgestattet ist.

Der Lotus-Effekt hat seinen Namen vom Lotusblatt erhalten. Dieses besitzt eine hydrophobe Oberflächenschicht, die darüber hinaus hügelartige Erhebungen im Mikrometerbereich aufweist. Gleichartige Ausbildungen sind in der Natur zum Beispiel bei Kohlblättern oder auch Obst, wie z.B. Äpfeln und Birnen, zu finden. Aufgrund der mikrorauhen Oberflächenstruktur dieser Naturgebilde steigt der Kontaktwinkel zwischen der benetzenden Flüssigkeit und der Oberfläche im Vergleich zu dem Kontaktwinkel mit einer planen hydrophobierten Oberfläche deutlich an. Das führt im Idealfall zu nahezu kugeligen Tropfen der Benetzungsflüssigkeit, so dass diese zusammen mit eingeschlossenen Verunreinigungen von der Oberfläche abrollen bzw. leicht von dieser entfernt werden können.

Der oben kurz beschriebene Lotus-Effekt wird seit längerer Zeit auf technische Oberflächen angewendet, um diese selbstreinigend auszuführen. Dabei wird die Oberfläche eines Substrates, zum Beispiel aus Metall, Glas oder Keramik mit einer dünnen Schicht oder Struktur versehen, die eine Rauhigkeit im Mikrometerbereich aufweist. Diese Struktur wird nachfolgend hydrophobiert bzw. besteht aus in sich selbst hydrophoben Partikeln. Die Mikrostrukturierung kann zum Beispiel durch Einbinden von wasserunlöslichen Partikeln in eine Matrix aus einem organischen oder anorganischen Material, welches die Haftung der Partikel auf dem Substrat sicherstellt (zum Beispiel DE 199 17 366 A1, DE 100 57 319 A1, EP 1 043 380 A1, DE 100 16 485 A1) oder aber durch die Erzeugung einer Mikrostrukturierung der SubstratOberfläche selbst durch physikalische oder chemische Abrasionsprozesse (DE 100 28 772 A1) erfolgen. Alle derart erzeugten hyperhydrophoben Beschichtungen sind aufgrund der Oberflächenrauhigkeit, die deutlich über der Wellenlänge des sichtbaren Lichtes liegt, matt, wenn das darunter liegende Substrat opak ist, oder aber transluzent in der Transmission, wenn das verwendete Substrat transparent ist.

In der oben bereits erwähnten DE 199 17 366 A1 wird eine Beschichtungs-Zusammensetzung vorgeschlagen, die in sich transparent ist und eine gute Haftung auf Glas haben soll. Als Anwendungsbeispiele wird die Beschichtung von Außenspiegeln von Kraftfahrzeugen, von Windschutzscheiben, von Metallen wie Aluminium und von Kunststoffen und lackierten Oberflächen, wie zum Beispiel in der Automobilindustrie, angeführt.

Auch bei Verwendung von Beschichtungs-Zusammensetzungen, die für sich genommen transparent im sichtbaren Spektrum des Lichts sind, wie in DE 199 17 366 A1 vorgeschlagen, treten die oben genannten Nachteile ein. Aufgrund der unterschiedlichen Brechungs-Indices zwischen den zur Erzeugung der Mikrostrukturierung eingelagerten mikrometergroßen Partikeln und der Matrix oder aber durch Lichtbrechung an den Korngrenzen kommt es zu einer diffusen Streuung des Lichts.

Aus den oben genannten Gründen ist es nach dem derzeitigen Stand der Technik nicht möglich, transparente Substrate, zum Beispiel Glasscheiben, bzw. Substrate mit glänzender Oberfläche, zum Beispiel Lackschichten herzustellen, die eine selbstreinigende Oberfläche haben und dennoch eine ausreichende Transparenz bzw. einen ausreichenden Glanz besitzen, um hinter dem Substrat befindliche Konturen noch deutlich zu erkennen bzw. um eine ausreichende Widerspiegelung von vor dem Substrat befindlichen Konturen auf dessen Oberfläche zu erzielen.

Aufgabe der vorliegenden Erfindung ist es daher, Substrate mit selbstreinigender Oberfläche zur Verfügung zu stellen, die eine hinreichende Transparenz oder einen hinreichenden Glanz aufweisen.

Diese Aufgabe wird erfindungsgemäß mit einem Substrat gelöst, das die Merkmale des Anspruchs 1 aufweist.

Mit den aus dem Stand der Technik bekannten hyperhydrophoben Beschichtungen oder Strukturen kann also erfindungsgemäß eine hinreichende Transparenz oder ein hinreichender Glanz von Bauteilen dadurch erreicht werden, dass sich die Mikrostruktur nur auf Teilbereichen des Substrats befindet. Die von den Mikrostrukturen freien Bereiche des Substrats weisen den Effekt der Hyperhydrophobie nicht auf und sind dementsprechend bei einem entsprechenden Substrat transparent oder glänzend. Durch die Schaffung einer geeigneten Makrostruktur aus hyperhydrophoben Bereichen und Bereichen mit einem anderen Benetzungsmuster bleiben die hyperhydrophoben Eigenschaften der Gesamt-Oberfläche des Substrats jedoch erhalten. Dabei kann die Transparenz bzw. der Glanz des Substrats über weite Bereiche durch die Flächenverhältnisse von hyperhydrophoben Flächenanteilen und nicht hyperhydrophoben Flächenanteilen gesteuert werden. Eine Beeinflussung kann in dieser Hinsicht noch zusätzlich durch die Schichtdicke oder Mikrorauhigkeit der hyperhydrophoben Bereiche erfolgen.

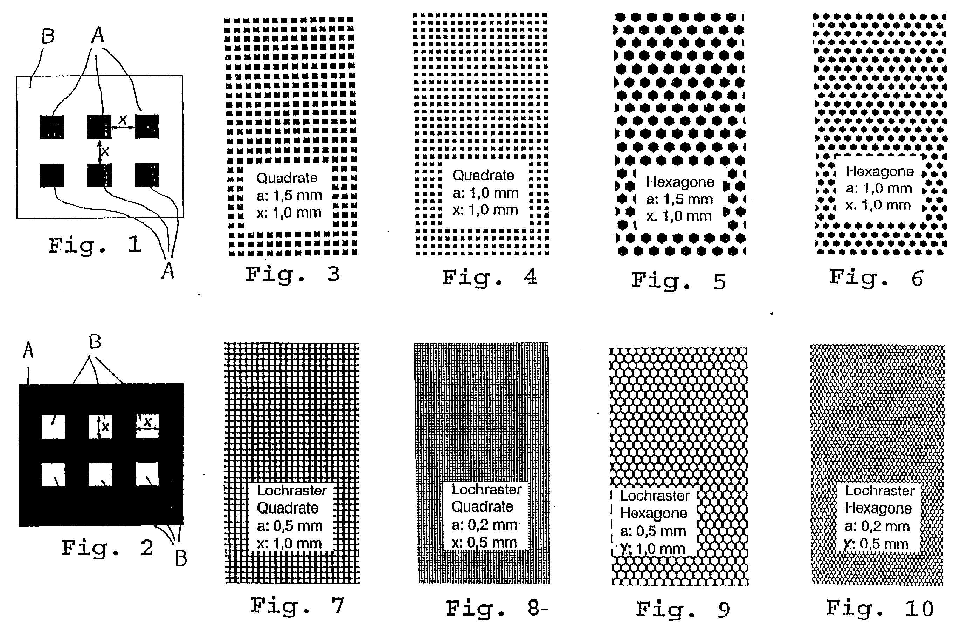

Nachfolgende, theoretische Betrachtungen sollen eine Erklärung für die erfindungsgemäße Wirkung geben. Ausgangspunkt dieser Betrachtungen ist ein in Fig. 1 schematisch in der Draufsicht dargestelltes Substrat, welches eine nicht hyperhydrophobe Oberfläche B besitzt, in der Inseln hyperhydrophober Bereiche A ausgebildet sind. Bei geringen Mengen einer Benetzungsflüssigkeit, die aus der Dampfphase auf der Oberfläche kondensiert, erfolgt die Abscheidung zunächst im Bereich der nicht hyperhydrophoben Oberfläche B, da hier aufgrund des geringeren Kontaktwinkels zwischen der Benetzungsflüssigkeit und dem Substrat weniger Arbeit zur Schaffung einer neuen Oberfläche benötigt wird. Im Idealfall bildet sich dann eine monomolekulare Benetzungsschicht aus. Dies wäre allerdings nur der Fall, wenn die Oberfläche B stark hydrophil oder hyperhydrophil wäre. Zum Beispiel bei einer unbehandelten Glasoberfläche und Wasser als benetzendem Stoff, ergibt sich jedoch eine Gleichgewichtshöhe eines Wasserfilms von circa 1,5 mm. Wenn man die Gravitation außer Acht lässt, die zu einer Verformung eines Tropfens führt, kann man diese Höhe auch als Radius einer Halbkugel auffassen. Somit würde sich bei einer ausreichenden Fläche innerhalb der Oberfläche B und nur einem Kondensationszentrum bei der Kondensation und einer ausreichenden Menge Wasser zunächst ein Tropfen mit einem Durchmesser von circa 3 mm bilden. Wenn nun diese Tropfengröße an den Rändern von den Bereichen A begrenzt wird, wird sich der ursprüngliche Tropfen aus Gründen der Minimierung der Oberflächen-Energie auflösen und Tropfen auf den hyperhydrophoben Bereichen A bilden, von denen diese dann abtropfen können. Bei größeren Mengen eines benetzenden Mediums tritt dies sofort ein. Die exakte Morphologie des Benetzung ist also von der verfügbaren Menge des benetzenden Mediums, der Geometrie der Bereiche A und B und deren Oberflächenspannung abhängig.

Das oben Gesagte gilt auch für umgekehrte, in Fig. 2 schematisch dargestellte Verhältnisse, also dann, wenn nicht hyperhydrophobe Inseln B in einer hyperhydrophoben Oberfläche A ausgebildet sind. Allerdings verringert sich bei dieser in Bezug auf Fig. 1 inversen Makrostruktur im Vergleich mit der von Fig. 1 die Transparenz und der Glanz.

Die erfindungsgemäßen Makrostrukturen (im Vergleich zu den Mikrostrukturen der hyperhydrophoben Schicht) lassen sich durch alle gängigen additiven und subtraktiven Verfahren der Oberflächenbeschichtung herstellen, wobei die geforderte Geometrie das Verfahren bestimmt. Bei Strukturen im Millimeterbereich sind Siebdruckverfahren möglich. Bei feineren Strukturen können die einzelnen Bereiche zum Beispiel phototechnisch maskiert werden und mittels chemischer oder physikalischer Dampfauftragstechniken aufgetragen werden. Auch ein lokaler Abtrag einer hyperhydrophoben Schicht, zum Beispiel mittels Laser, ist vorstellbar. Generell sind alle Muster der Makrostruktur möglich, solange der Abstand zwischen den hyperhydrophoben Bereichen bzw. die Unterbrechungen in der hyperhydrophoben Fläche nicht größer sind als der Tropfen-Durchmesser eines benetzenden Mediums, der sich unter Idealbedingungen beim Wachstum eines Keims während der Kondensation auf dem nicht hyperhydrophoben Bereich bildet. Besonders geeignet sind für die Muster Geometrien, bei denen die hyperhydrophoben Beschichtungen oder Strukturen aus regelmäßig aufgebauten Zellen bestehen, die für sich eine vollständige Flächenfüllung zulassen, also zum Beispiel Dreiecke, Rechtecke, Quadrate und Hexagone. Bei derartigen regelmäßigen Mustern kann auch bei einem hohen Flächenanteil von nicht hyperhydrophoben Bereichen, und damit bei insgesamt großer Transparenz bzw. großem Glanz, ein gleichmäßiger Abstand der hyperhydrophoben Bereiche untereinander bzw. gleichmäßige Unterbrechungen innerhalb einer hyperhydrophoben Fläche sichergestellt werden.

Vorteilhafte Ausgestaltungen der Erfindung ergeben sich aus den Unteransprüchen.

Die Erfindung wird nachstehend anhand von Ausführungsbeispielen näher erläutert. In der dazugehörigen Zeichnung zeigen:
- Fig. 3 - 10: verschiedene Makrostrukturen hyperhydrophober Bereiche auf einer Substrat-Oberfläche, wobei in den
- Fig. 3 - 6: Punktraster, und in den
- Fig. 7 - 10: Lochraster dargestellt sind.

Bei dem Substrat kann es sich beispielsweise um eine Glasscheibe handeln, die ein- oder beidseitig selbstreinigend sein soll, bei einer Transparenz, die es ermöglicht, Konturen hinter der Glasscheibe deutlich erkennen zu können.

Die gezeigten Makrostrukturen werden durch Siebdruck auf die Glasscheibe aufgebracht, wobei in das Beschichtungsmaterial Partikel eingebunden sind, die die erforderliche Rauhigkeit im Mikrometerbereich hervorrufen. Es ist aber bei den in den Fig. 3 - 6 gezeigten Punktrastern auch möglich, die Beschichtung mit Hilfe einer selbstklebenden Folie vorzunehmen, bei der die "Punkte" ausgestanzt sind und nach dem Abziehen der Folie von der Glasscheibe an dieser in dem gewünschten, von der Folie fixierten Raster haften bleiben. Beim beidseitigen Auftragen der Beschichtung ist darauf zu achten, dass die Makrostrukturen deckungsgleich aufgebracht werden, um die Transparenz nicht weiter zu beeinträchtigen.

Bei den in den Fig. 3 - 6 gezeigten Punktrastern bilden die hyperhydrophoben Bereiche A Inseln in einer ansonsten nicht hyperhydrophoben Fläche B, wie in Fig. 1 veranschaulicht. In den Fig. 3 und 4 sind die hyperhydrophoben Bereiche A als Quadrate und in den Fig. 5 und 6 als Hexagone ausgeführt. Dabei ist das Maß a die Kantenlänge der Quadrate bzw. Hexagone und das Maß x der Abstand zwischen den Quadraten bzw. Hexagonen. In allen Fig. 3 - 6 verhält sich der Flächenanteil der hyperhydrophoben Bereiche A zum Flächenanteil der nicht hyperhydrophoben Fläche B wie 44:56.

Die in den Fig. 3 - 6 weiss erscheinende Fläche B ist transparent, während die schwarz erscheinenden Bereiche A bei geringer Schichtdicke bzw. bei einem für sich genommen im sichtbaren Spektrum des Lichts transparenten Beschichtungsmaterial transluzent sind.

Bei den in den Fig. 7 - 10 gezeigten Makrostrukturen bilden die nicht hyperhydrophoben Bereiche B Inseln in einer hyperhydrophoben Fläche A, wie in Fig. 2 veranschaulicht. In den Fig. 7 - 8 sind die nicht hyperhydrophoben Bereiche B als Quadrate und in den Fig. 9 und 10 als Hexagone ausgeführt. Dabei ist das Maß x die Kantenlänge der Quadrate bzw. y die Kantenlänge der Hexagone und das Maß a der Abstand zwischen den Quadraten bzw. Hexagonen. In allen Fig. 7 - 10 verhält sich der Flächenanteil der hyperhydrophoben Fläche A zum Flächenanteil der nicht hyperhydrophoben Bereiche B wie 45:55. Bezüglich der Transparenz und Transluzenz der Bereiche B bzw. der Fläche A gilt das zu den Fig. 3 - 6 Gesagte.

Bei den in den Fig. 3 - 10 gezeigten Makrostrukturen sind die Abstände zwischen den hyperhydrophoben Bereichen A (Maß x in den Fig. 3 - 6) bzw. die Unterbrechungen in der hyperhydrophoben Fläche A kleiner als das bei den theoretischen Betrachtungen in der Beschreibungseinleitung genannte Maß von 3 mm für den Durchmesser eines Wassertropfens. Bei einem ausreichenden Wasserangebot wird ein sich auf der Glasoberfläche bildender Wassertropfen daher zunächst mehrere nicht hyperhydrophobe Bereiche B und hyperhydrophobe Bereiche A abdecken. Er befindet sich dann aber aufgrund der Überdeckung der hyperhydrophoben Bereiche A in einem labilen Gleichgewicht und löst sich aufgrund dessen in viele kleine Tropfen auf, die dann von den hyperhydrophoben Bereichen A abtropfen.

## Patentansprüche

1. Substrat mit selbstreinigender Oberfläche, die hyperhydrophob unter Ausnutzung des Lotus-Effektes ausgestattet ist, **dadurch gekennzeichnet, dass** sie entweder eine zusammenhängende Fläche (B) mit nicht hyperhydrophoben Oberflächeneigenschaften aufweist, die im Abstand (x) voneinander getrennte diskrete Flächenbereiche (A) mit hyperhydrophoben Oberflächeneigenschaften umfasst, oder dass sie eine zusammenhängende Fläche (A) mit hyperhydrophoben Oberflächeneigen-schaften aufweist, die diskrete Flächenbereiche (B) mit nicht hyperhydrophoben Oberflächeneigenschaften umfasst, deren Erstreckung in mindestens eine Richtung nicht größer als (x) ist, wobei (x) nicht größer als der Durchmesser eines Tropfens eines benetzenden Mediums ist, der sich unter Idealbedingungen beim Wachstum eines Keims während der Kondensation auf dem nicht hyperhydrophoben Flächenbereich (B) bildet.

2. Substrat nach Anspruch 1, **dadurch gekennzeichnet, dass** der Oberflächenanteil der Fläche/Flächenbereiche (A) mit hyperhydrophoben Eigenschaften >25% ist.

3. Substrat nach Anspruch 1 oder Anspruch 2, **dadurch gekennzeichnet, dass** (x) einen Wert zwischen 1 und 3 mm aufweist.

4. Substrat nach einem der vorstehenden Ansprüche, **dadurch gekennzeichnet, dass** es aus Glas besteht und die hyperhydrophoben Flächen/Flächenbereiche (A) im Siebdruckverfahren aufgebracht sind.
